(19) Europäisches Patentamt
European Patent Office
Office européen des brevets

(11) **EP 4 324 581 A1**

(12) **EUROPEAN PATENT APPLICATION**

(43) Date of publication:
**21.02.2024 Bulletin 2024/08**

(21) Application number: **23188900.7**

(22) Date of filing: **01.08.2023**

(51) International Patent Classification (IPC):
***B22F 10/22*** (2021.01)   ***B22F 12/53*** (2021.01)
***B33Y 30/00*** (2015.01)

(52) Cooperative Patent Classification (CPC):
**B22F 12/53; B05B 1/08; B22F 10/22; B33Y 30/00;**
**B41J 2/385;** B22F 2009/088; B22F 2009/0892;
B29C 64/209; B33Y 10/00

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:   **17.08.2022  US 202217820468**

(71) Applicant: **Xerox Corporation**
**Webster, NY 14580 (US)**

(72) Inventor: **TAWIL, Kareem**
**Webster, 14580 (US)**

(74) Representative: **Gill Jennings & Every LLP**
**The Broadgate Tower**
**20 Primrose Street**
**London EC2A 2ES (GB)**

(54) **HIGH-THROUGHPUT LIQUID METAL INKJET NOZZLE WITH POROUS LAYER FOR MENISCUS DAMPING**

(57)    A nozzle for a 3D printer includes a structure and a layer positioned at least partially within the structure. The layer is configured to decrease a settling time of a meniscus of a printing material after a drop of the printing material is ejected from the nozzle.

FIG. 1

EP 4 324 581 A1

**Description**

**Technical Field**

The present teachings relate generally to three-dimensional (3D) printing and, more particularly, to systems and methods for increasing the firing frequency and/or throughput of a 3D printer by forming and/or positioning a porous layer within a nozzle of the 3D printer.

**Background**

The productivity of a drop-on-demand (DOD) 3D printer is directly related to the maximum firing frequency of the printhead. This maximum firing frequency is even more relevant in single nozzle printhead designs. Identifying ways to increase the maximum material throughput may improve the overall speed and efficiency of the printer. A series of challenges exist with the jetting of molten metal that have thus far hindered the maximum firing frequency of metal DOD printers.

One challenge is the high temperatures required to melt and jet molten metals. Conventional actuation methods from conventional inkjet printers cannot be replicated at these higher temperatures. Thus, conventional control techniques utilizing geometric features and pulse tailoring are difficult, if not impossible, to adapt to a metal printhead. Even with the implementation of advanced pulse control, another more difficult problem exists with the material itself. What is needed is an improved system and method for increasing the maximum firing frequency and throughput of metal DOD printers.

**Summary**

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later.

An apparatus is disclosed. The apparatus includes a body that is configured to be positioned at least partially within a nozzle of a printer. The body has a porosity from about 10% to about 70%. The body has a length from about 100 $\mu$m to about 3 mm. The body has a thickness from about 5 $\mu$m to about 100 $\mu$m.

A nozzle is also disclosed. The nozzle includes a structure and a layer positioned at least partially within the structure. The layer is configured to decrease a settling time of a meniscus of a printing material after a drop of the printing material is ejected from the nozzle.

In another embodiment, the nozzle includes a structure defining an inner circumferential surface. The nozzle also includes a layer positioned at least partially within the structure. The layer is an annular layer that is in contact with the inner circumferential surface. The layer has an average porosity from about 10% to about 70%.

A 3D printer is also disclosed. The 3D printer includes a nozzle configured to eject a drop of a printing material therefrom. The 3D printer also includes a layer positioned at least partially within the nozzle. The layer is configured to decrease a settling time of a meniscus of the printing material after the drop is ejected from the nozzle.

In another embodiment, the 3D printer includes an ejector configured to have a printing material positioned therein. The printing material includes aluminum. The 3D printer also includes a nozzle positioned downstream from the ejector. The printing material is jetted through the nozzle and ejected therefrom as a plurality of drops. The 3D printer also includes a body positioned at least partially within the nozzle. An inner surface of the body has a porosity from about 20% to about 60%. The body has a length from about 100 $\mu$m to about 3 mm. The body has a thickness from about 5 $\mu$m to about 100 $\mu$m. The printing material flows through the body before being ejected as the drops. The body is configured allow an increased mass throughput of the printing material flowing through the nozzle. The increased mass throughput is from about 0.06 g/s to about 0.20 g/s. The body is configured to allow an increased frequency at which the drops are ejected. The increased frequency is from about 400 Hz to about 1000 Hz. The body is configured to decrease a maximum extension of a meniscus of the printing material after each drop is ejected. The maximum extension is less than 0.05 mm. The body is configured to decrease a settling time of the meniscus of the printing material after each drop is ejected. The settling time is less than 6e-3 s. The drops form at least part of a 3D object.

A method is also disclosed. The method includes forming or positioning a layer within a nozzle of a 3D printer. The layer is configured to decrease a settling time of a meniscus of a printing material after a drop of the printing material is ejected from the nozzle.

In another embodiment, the method includes jetting a first portion of a printing material through a nozzle of a printer. At least some of the first portion of the printing material solidifies within the nozzle and forms a body that is positioned at least partially within the nozzle. The body has a porosity from about 10% to about 70%. The body has a length from about 100 $\mu$m to about 3 mm. The body has a thickness from about 5 $\mu$m to about 100 $\mu$m.

In another embodiment, the method includes forming or positioning an annular porous layer within a nozzle of the 3D printer. The porous layer has an average porosity from about 20% to about 60%. The porous layer has a length from about 100 $\mu$m to about 3 mm. The porous layer has a thickness from about 5 $\mu$m to about 100 $\mu$m. The method also includes jetting a printing material through the nozzle. The printing material that is jetted through the nozzle includes a liquid aluminum. The printing material that is jetted through the nozzle has a mass throughput from about 0.06 g/s to about 0.20 g/s. The printing material that is jetted through the nozzle causes a plurality of drops to be ejected from the nozzle at a predetermined frequency. The predetermined frequency is from about 400 Hz to about 1000 Hz. A maximum extension of a meniscus of the printing material is less than 0.05 mm after each drop is ejected. A settling time for the meniscus of the printing material is less than 6e-3 s after each drop is ejected. The drops form at least part of a 3D object.

## Brief Description of the Drawings

The accompanying drawings, which are incorporated in and constitute a part of this specification, illustrate embodiments of the present teachings and together with the description, serve to explain the principles of the disclosure. In the figures:

Figure 1 depicts a schematic cross-sectional side view of a 3D printer, according to an embodiment.

Figure 2 depicts an enlarged portion of Figure 1 showing a meniscus of a liquid printing material in a nozzle of the 3D printer, according to an embodiment.

Figure 3 illustrates the formation of a drop and the meniscus resonance of the drop in six different frames, according to an embodiment.

Figures 4A and 4B depict graphs showing the mapped frequency (Figure 4A) and damping ratio (Figure 4B) at various nozzle bore lengths and nozzle bore diameters, according to an embodiment.

Figure 5 depicts a schematic cross-sectional side view of the nozzle showing a porous layer located therein, according to an embodiment.

Figures 6A-6F depict images of nozzles with different porous layers, according to an embodiment.

Figures 7 depicts a cross-sectional side view of the nozzle with the porous layer, according to an embodiment.

Figure 8 illustrates a graph showing the meniscus resonance for a first nozzle with the porous layer and a second nozzle without the porous layer, according to an embodiment.

Figure 9 illustrates a schematic cross-sectional side view of the nozzle with the porous layer and the nozzle without the porous layer, according to an embodiment.

Figure 10 illustrates a flowchart of a method for operating the 3D printer, according to an embodiment.

## Detailed Description

Reference will now be made in detail to exemplary embodiments of the present teachings, examples of which are illustrated in the accompanying drawings. Wherever possible, the same reference numbers will be used throughout the drawings to refer to the same, similar, or like parts.

Conventional 3D printers that use conventional (e.g., aqueous) ink rely on fluid viscosity, nozzle geometry, and/or active pulse tailoring to enable high-frequency jetting. In contrast, the high surface tension and low viscosity of liquid metals present a unique challenge for high-throughput 3D printing. The system and method described below utilize an annular porous layer (also referred to as medium or region) inside the nozzle to artificially increase the damping of the oscillation (also referred to as the resonance) of a meniscus of the liquid metal in or below the nozzle to allow higher deposition frequencies and/or throughput.

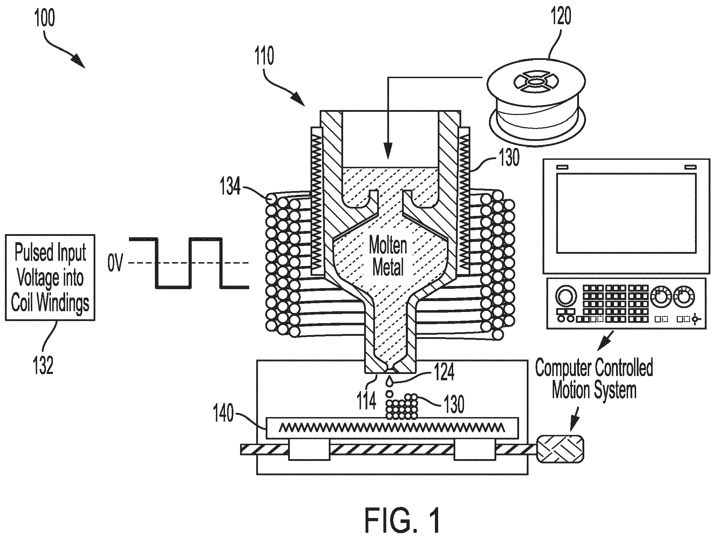

Figure 1 depicts a schematic cross-sectional side view of a 3D printer 100, according to an embodiment. The printer 100 may include an ejector (also referred to as a pump) 110. As used herein, the ejector 110 refers to a structure that can be selectively activated to cause build material to be ejected from a nozzle. The ejector 110 may define an inner volume that is configured to receive a printing material 120. The printing material 120 may be or include a metal, a polymer, or the like. In one embodiment, the printing material 120 may be greater than about 50 % metal, greater than 60% metal, greater than 70% metal, greater than 80% metal, greater than 90% metal, or about 100% metal (e.g., by volume and/or mass). For example, the printing material 120 may be or include a spool of aluminum wire (e.g., 6061 aluminum). In another embodiment, the printing material 120 may be or include copper.

The 3D printer 100 may also include one or more heating elements 130. The heating elements 130 are configured to melt the printing material 120 within the inner volume of the ejector 110, thereby converting the printing material 120 from a solid state to a liquid (e.g., molten) state within the inner volume of the ejector 110.

The 3D printer 100 may also include a power source 132 and one or more metallic coils 134. The metallic coils 134 are wrapped at least partially around the ejector 110 and/or the heating elements 130. The power source 132 may be coupled to the coils 134 and configured to provide power thereto. In one embodiment, the power source 132 may be configured to provide a step function direct current (DC) voltage profile (e.g., voltage pulses) to the coils 134, which may create an increasing magnetic field. The increasing magnetic field may cause an electromotive force within the ejector 110, that in turn causes an induced electrical current in the liquid printing material 120. The magnetic field and the induced electrical current in the liquid printing material 120may create a radially inward force on the liquid printing material 120, known as a Lorentz force. The Lorentz force creates a pressure at an inlet of a nozzle 114 of the ejector 110. The pressure causes the liquid printing material 120to be jetted through the nozzle 114 in the form of one or more drops (also referred to as droplets) 124. As used herein, the nozzle 114 refers to a physical structure from which a drop 124 of the print material 120, such as molten metal, begins flight.

The 3D printer 100 may also include a substrate (also referred to as a build plate) 140 that is positioned below the nozzle 114. The drops 124 may be jetted through the nozzle 114 and subsequently land on the substrate 140 where they may cool and solidify to form a first (e.g., bottom) layer. Additional drops 124 may be jetted to form layer upon layer that eventually produces a desired 3D object 130.

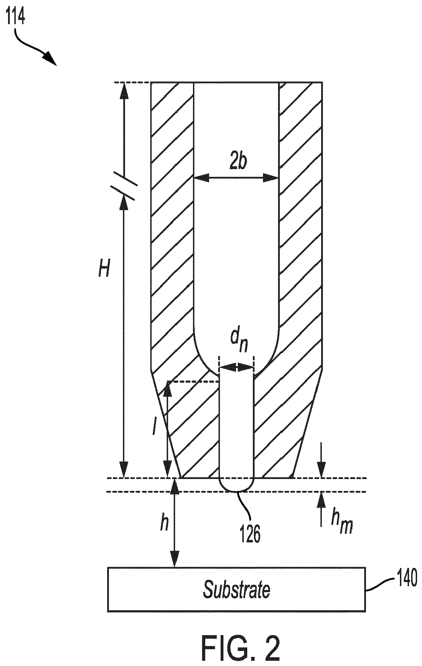

Figure 2 depicts an enlarged view of the nozzle 114, according to an embodiment. The lower surface of the liquid printing material 120 in and/or below the nozzle 114 may have a meniscus 126. The meniscus 126 is defined as the liquid-gas boundary located at the exit of the nozzle 114. The meniscus 126 may be dampened to reduce the resonance of the meniscus 126 after each drop 124 is jetted. This may cause the meniscus 126 to reach equilibrium more quickly, which increases the firing frequency and/or throughput. As used herein, "firing frequency" refers to the frequency at which the drops 124 are ejected from the nozzle 114. As used herein, "throughput" refers to the mass and/or volume of the printing material 120 flowing through the nozzle 114.

The primary driver of the fluid dynamics inside the 3D printer 100 is defined by the material properties of the fluid being jetted. The comparison between conventional aqueous inks and liquid (e.g., molten) metals can be seen in Table 1 below. Some of the parameters defining the meniscus resonance are the surface tension and the viscosity of the printing material. Molten metals have a high surface tension and a low velocity. This ratio of properties leads to highly energetic meniscus behavior with little damping. The lack of damping leads to long resonance time and limits the maximum stable firing frequency.

| Table 1 | | |
|---|---|---|
| Property | Aqueous Ink | 6061 Aluminum |
| Density (kg/m$^3$) | 997.01 | 2347.58 |
| Surface Tension (n/m) | 0.07197 | 0.7357 |
| Viscosity (mPa*s) | 1.0518 | 0.97885 |
| $\sigma/\mu$ | 0.0684 | 0.7516 |

To increase the maximum frequency, the resonance of the meniscus 126 may be controlled (e.g., dampened). The system and method described herein solve this challenge with a design that utilizes passive topology within the nozzle 114 (e.g., an annular porous layer) to control and dampen the meniscus 126. As a result, the system and method may advance the capability (e.g., increase the maximum firing frequency and/or throughput) of a single nozzle molten metal printer.

The maximum firing frequency of the 3D printer 100 may be defined as the number of drops 124 that can be jetted and/or deposited per second, usually noted in hertz (Hz). This value is predicated on the fact that stable drop behavior can be maintained at this frequency. Stable drop behavior can be defined as consistent mass, velocity, and/or satellite behavior between each drop 124 (e.g., within +/-10% of the previous drop). Achieving maximum firing frequencies without drop stability is not viable and may lead to PQ errors in the final product.

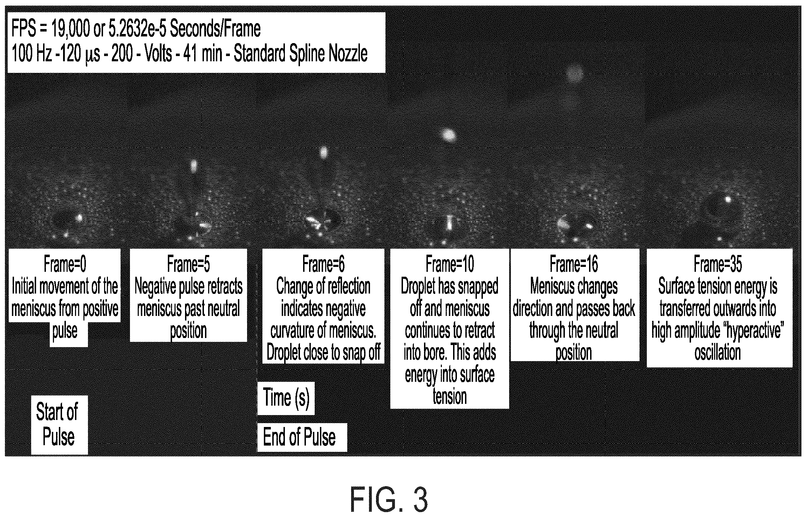

The stability of the 3D printer 100 may depend at least partially on the stability of the meniscus 126 of the printing material 120 (e.g., in and/or slightly below the nozzle 114). During idle conditions, the meniscus 126 rests in a convex state, protruding slightly downward from the nozzle 114. As a pulse is actuated, the meniscus 126 grows and eventually turns into the deposited drop 124. After drop 124 breaks off and falls, a new meniscus 126 is created and undergoes a series of oscillations. This process is illustrated in Figure 3. More particularly, Figure 3 illustrates (an upside-down view of) the formation of a drop 124 and the meniscus resonance in six different frames, according to an embodiment. After several oscillations, the meniscus 126 will reach equilibrium in the idle position. At this point, the next drop 124 can be ejected, and the process is repeated. The timing of this drop formation, break up, and meniscus oscillation may determine the maximum firing frequency of the nozzle 114.

Referring again to Figure 2, the oscillation and damping the fluid meniscus 126 may be used to design and control the jetting of the 3D printer 100 (e.g., the nozzle 114). The 3D printer 100 (e.g., nozzle 114) can be idealized and modeled as a linear damping system. The governing equation can be written as follows:

$$m\ddot{x}+c\dot{x}+kx=0 \tag{1}$$

where m is the mass, c is the damping coefficient, k is the spring constant, and x is the displacement of the meniscus 126. From this linear equation, the natural frequency of oscillation $f_c$ and the damping ratio $\Gamma$ can be determined, as shown below:

$$m = \frac{\pi}{4}d_n^2\rho H \tag{2}$$

$$c = 8\pi v l \tag{3}$$

$$k = \frac{\pi\gamma d_n^4}{2\left(\frac{d_n^2}{4} + h_m^2\right)^2}\left(1 - \frac{2h_m^2}{\frac{d_n^4}{4} + h_m^2}\right) + \rho g h \frac{d_n^4}{16b^2} \tag{4}$$

$$f_c = \frac{1}{2\pi}\sqrt{\frac{k}{m}} \tag{5}$$

$$\Gamma = \frac{c}{2\sqrt{mk}} \tag{6}$$

where $\rho$ is the density of the printing material 120, $\gamma$ is the surface tension of the printing material 120, $\upsilon$ is the viscosity of printing material 120, H is the approximate printing material column height from the reservoir to free end of the nozzle 114, b is the radius of the capillary far above the nozzle 114, h is the distance between the nozzle 114 and the substrate 140, $h_m$ is the height of the meniscus 126, $d_n$ is the inner diameter of nozzle 114, and l is the total length of thinnest part of nozzle 114. Table 2 shows calculated values of natural frequency and damping ratio for two different printing materials.

| Table 2 | | |
|---|---|---|
| Property | 500 $\mu$m Diameter, 500 $\mu$m Bore nozzle | |
| | Aqueous Ink | 6061 Aluminum |
| Natural frequency inside nozzle, $f_c$ (Hz) | 607 | 1266 |
| Damping ratio of meniscus, $\Gamma$ | 0.0228 | 0.0043 |

Analyzing this 1D model details the parameters for damping the meniscus 126 and increasing the maximum firing frequency of the drops 124. The geometric parameters that influence the frequency and damping include the nozzle bore length *l* and/or nozzle bore diameter $d_n$. Mapping these parameters can determine optimal design points to increase the frequency of oscillation, increase the damping ratio, and/or decrease the settling time of the system 100.

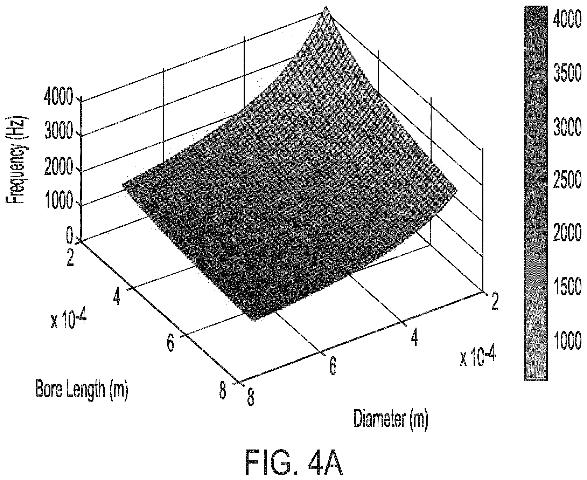

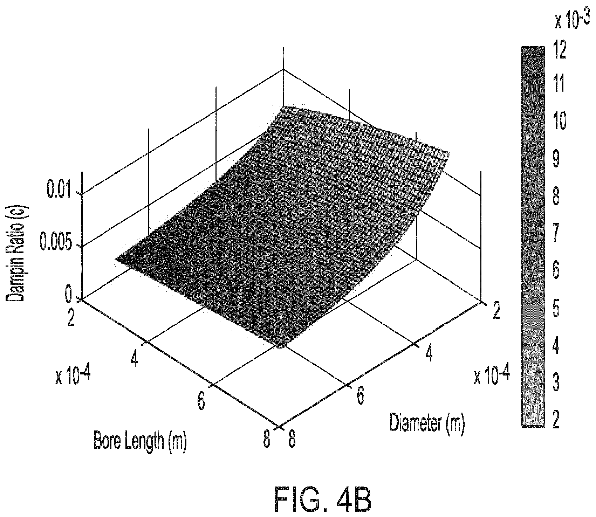

Figures 4A and 4B depict graphs showing the mapped frequency (Figure 4A) and damping ratio (Figure 4B) of the meniscus 126 at various nozzle bore lengths *l* and nozzle bore diameters $d_n$, according to an embodiment. As may be seen, a more optimal point of operation can be achieved at smaller sizes and longer nozzle bore lengths *l*.

However, this smaller nozzle bore diameter $d_n$ may also reduce the drop size, therefore reducing the overall material throughput of the nozzle 114.

The system and method described herein utilize a geometric design to optimize the settling time of the meniscus 126 without decreasing the mass of the drops 124. The system and method utilize an annular porous layer placed along the inner surface of the nozzle 114. In other words, the nozzle 114 and the porous layer may be concentric with one another. The bore through which the printing material 120 flows extends through the bore of the porous layer. The porous layer increases the resistance of the flow of the printing material 120 in the nozzle 114. The porous layer may also or instead increase the fluid damping of the meniscus 126. The porous layer may also or instead augment the low viscosity of molten metals and allow the fluid to dampen more quickly. This increased damping in the bore allows for higher stable firing frequencies and higher material throughput. The porous layer can be machined, chemically grown, or otherwise deposited inside the bore prior to installation in the 3D printer 100.

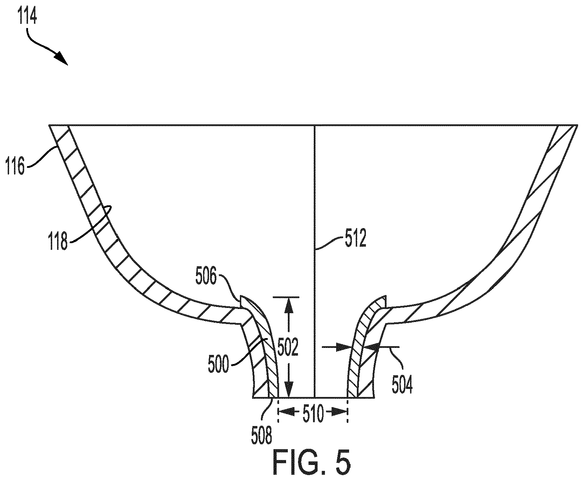

Figure 5 depicts a schematic cross-sectional side view of the nozzle 114, according to an embodiment. The nozzle 114 may be or include a structure 116 defining an inner circumferential surface 118. The nozzle (e.g., the structure 116) may be made from graphite, metal, ceramic, or a combination thereof. The nozzle (e.g., the structure 116) may have a diameter (e.g., an inner diameter) from about 400 micrometers ($\mu$m) to about 600 $\mu$m, from about 420 $\mu$m to about 520 $\mu$m, or from about 460 $\mu$m to about 560 $\mu$m (e.g., about 510 $\mu$m).

In one embodiment, the nozzle 114 may include a porous layer (also referred to as a body) 500. In another embodiment, the nozzle 114 may not include the porous layer 500. Rather, the porous layer 500 may be positioned at least partially within the nozzle 114 (e.g., the structure 116). The nozzle 114 and the porous layer 500 may be substantially concentric with one another with the porous layer 500 being positioned radially inward from the nozzle 114 (e.g., the structure 116). The porous layer 500 may be formed and/or positioned on and/or within the inner surface 118 of the nozzle 114 (e.g., the structure 116). As used herein, the term porous refers to void(s) (i.e., empty) spaces in the layer. Porosity refers to a measure of the voids in the layer. Porosity is a fraction of the volume of voids over the total volume, between 0 and 1, or as a percentage between 0% and 100%.

In one embodiment, the porous layer 500 may be made from a solidified portion of the printing material 120. For example, the porous layer 500 may be made from a solidified portion of a sacrificial portion of the printing material 120. The sacrificial portion may not be used to print the 3D object 130. The porous layer 500 may also or instead be made from intermetallic impurities in metal (MgO, Al203, Al4C3, TiO, etc.). These particles may sinter to the inner surface 118 of the structure 116 and form the porous layer 500. In another embodiment, the porous layer 500 may be made from a ceramic material including MgO, Al2O3, and/or other ceramic materials. In yet another embodiment, the porous layer may be or include a metallic layer created from another high-temperature metal such as tungsten, steel, molybdenum, or other high melting point metals.

The porous layer 500 may have a length 502 from about 100 $\mu$m to about 3 mm or from about 300 $\mu$m to about 1 mm. The porous layer 500 may have an average thickness 504 from about 5 $\mu$m to about 100 $\mu$m, from about 10 $\mu$m to about 50 $\mu$m, or from about 15 $\mu$m to about 30 $\mu$m. The porous layer 500 may have a first (e.g., upper) end 506 and a second (e.g., lower) end 508. A diameter 510 of the upper end 506 may be greater than the lower end 508. The diameter 510 may refer to the inner diameter (ID), the outer diameter (OD), or both. In other embodiments, the diameter 510 of the upper end 506 may be the same or less than the lower end 508. The diameter 510 of the porous layer 500 may increase proceeding along a central longitudinal axis 512 through the porous layer 500 (e.g., upward) toward the ejector 110. The diameter 510 of the porous layer 500 (and/or the channel defined through the porous layer 500) may be from about 400 $\mu$m to about 600 $\mu$m or from about 420 $\mu$m to about 520 $\mu$m (e.g., about 470 $\mu$m).

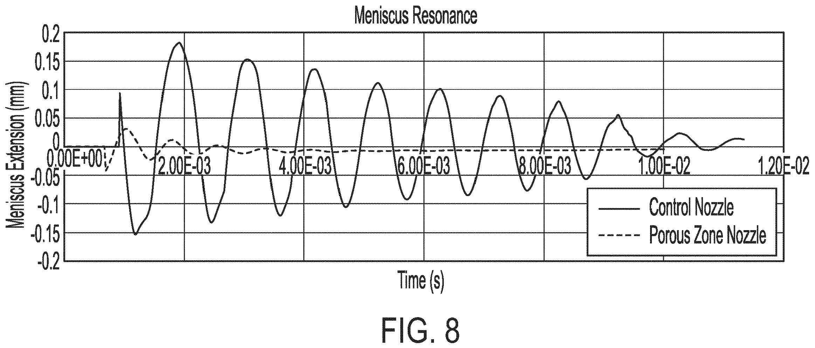

The porous layer 500 may increase the resistance to the flow of the liquid printing material 120 flowing therepast when compared to conventional nozzles that have a smooth inner surface. For example, the porous layer 500 may provide a resistance from about 1 kPa to about 100 kPa. The porous layer 500 may also or instead increase the damping of the meniscus 126 when compared to conventional nozzles that have a smooth inner surface, which is described in greater detail below with respect to Figure 8. The porous layer 500 may have a porosity (e.g., an average porosity) from about 10% to about 70%, about 20% to about 60%, or about 30% to about 50%.

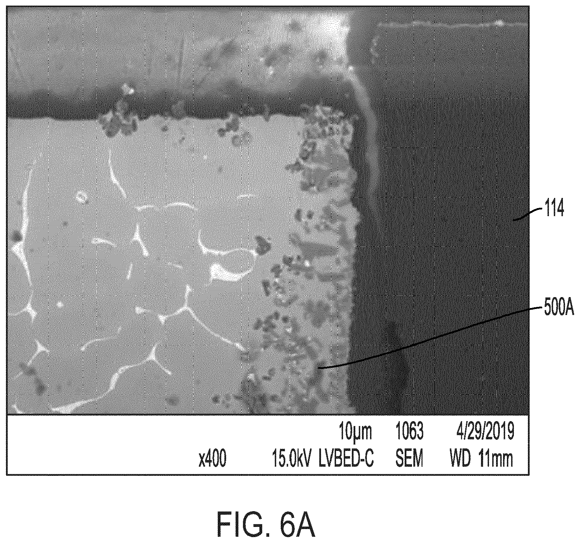

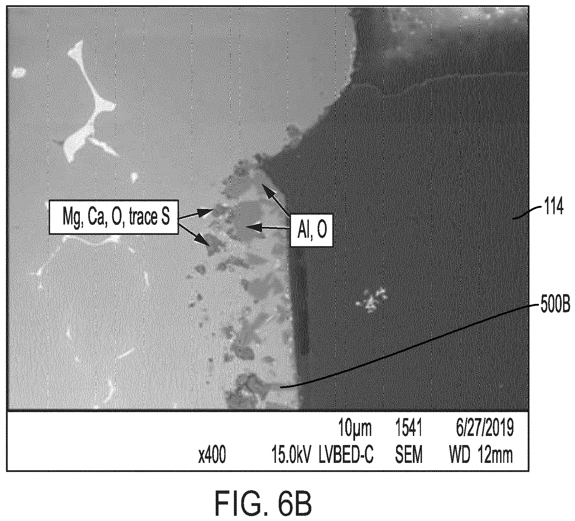

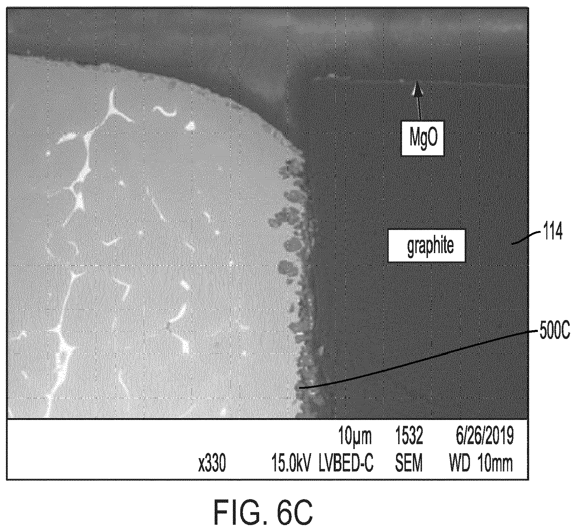

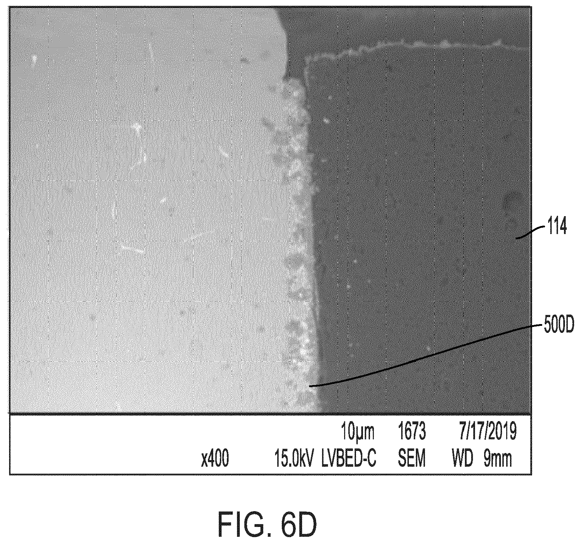

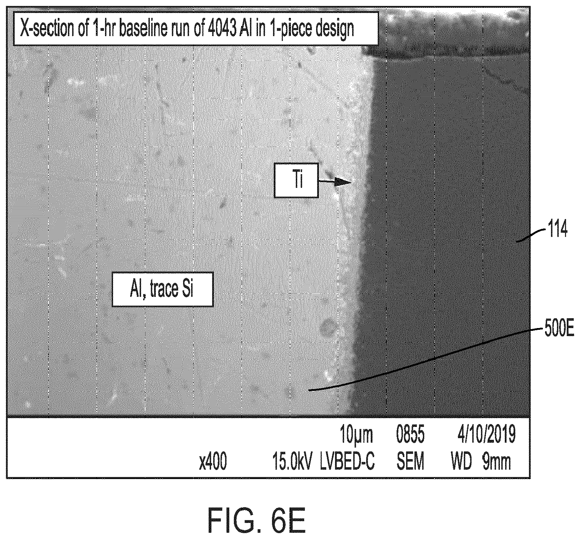

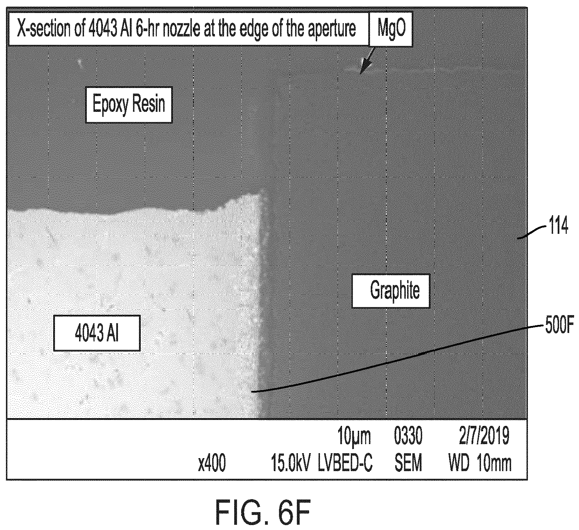

Figures 6A-6F depict images of nozzles with different porous layers 500A-500F inside the nozzle 114, according to an embodiment. The effect of these porous layers 500A-500F along the inner surface of the nozzle 114 may be further correlated to the printhead behavior utilizing high speed video analysis. A first video shows a new ejector that does not have (e.g., has not built up) a porous layer. In the first video, after the drop breakup, a high magnitude meniscus oscillation occurs that takes a long time to settle. A second video shows an ejector that has built up a larger porous layer. The meniscus settles at a much faster rate with lower magnitude of oscillation. This allows this ejector to fire at high frequency with stable drop behavior. The effect of these porous zones detailed in Figures 6A-6F was further investigated utilizing computer simulation software. A test case was identified by analysis of a nozzle cross-section with a representative porous layer.

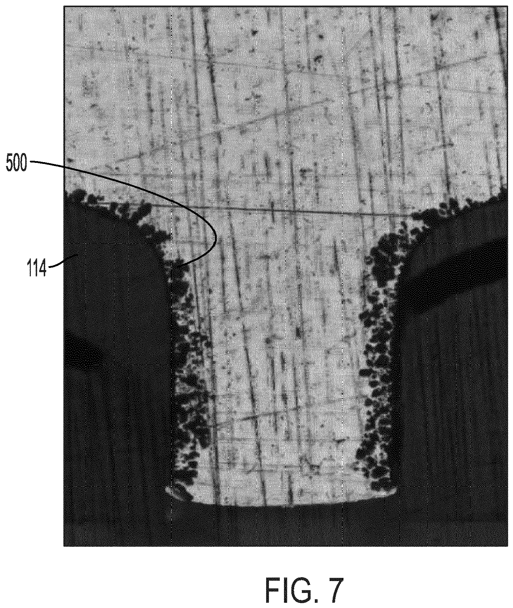

Figure 7 depicts a cross-sectional view of the nozzle 114 with the porous layer 500, according to an embodiment. Image analysis of the ejector in Figure 7 can be fed into a mathematical model for modeling of porous layer. The Blake-Kozeny can be described through a set of equations:

$$\frac{|\Delta p|}{L} = \frac{150\mu}{D_p^2} \frac{(1-\varepsilon)^2}{\varepsilon^3} v_\infty \qquad (7)$$

$$\alpha = \frac{D_p^2}{150} \frac{\varepsilon^3}{(1-\varepsilon)^2} \qquad (8)$$

$$C_2 = \frac{3.5}{D_p} \frac{(1-\varepsilon)}{\varepsilon^3} \qquad (9)$$

The parameters $\alpha$ and $C_2$ are used as the boundary conditions inside the simulation. The simulation domain is detailed in Figure 5. A single drop may be ejected from a first nozzle containing the porous layer and from a second nozzle without the porous layer (i.e., a conventional nozzle). The subsequent meniscus oscillations may be tracked and compared. The nozzle with the porous layer was able to replicate experimental results with lower magnitude of oscillation and a much faster settling time when compared to the nozzle without the porous layer.

Figure 8 illustrates a graph showing the meniscus resonance for a nozzle with the porous layer and a nozzle without the porous layer, according to an embodiment. Figure 8 may be used to track the meniscus resonance. As shown, after the drop is ejected from the nozzle with the porous layer (e.g., at time 0 s), a maximum extension of the meniscus may be less than 0.1 mm or less than 0.05 mm. In contrast, after the drop is ejected from the nozzle without the porous layer, the maximum extension is about 0.18 mm.

After the drop is ejected from the nozzle with the porous layer, the meniscus resonance may fall below 0.06 or 0.04 mm within 1e-3 s, fall below 0.04 or 0.025 mm within 2e-3 s, and/or fall below 0.02 or 0.01 mm within 4e-3s. In contrast, after the drop is ejected from the nozzle without the porous layer, the meniscus resonance may be about 0.9 mm within 1e-3 s, about 0.18 mm within 2e-3 s, and/or about 0.14 mm within 4e-3 s.

The meniscus resonance within the nozzle with the porous layer may have a settling time that is less than 2e-3 s, about 4e-3 s, or about 6e-3 s. In contrast, the meniscus resonance within the nozzle without the porous layer may have a settling time that is less than 1e-2 s, about 2e-2 s, or about 4e-2 s. As used herein, "settling time" refers to the time from when a drop is ejected from the nozzle to the time when the meniscus reaches equilibrium. In an example, equilibrium is reached when the amplitude of the meniscus resonance decreases to 5% of the maximum value, 2% of the maximum value, or 1% of the maximum value.

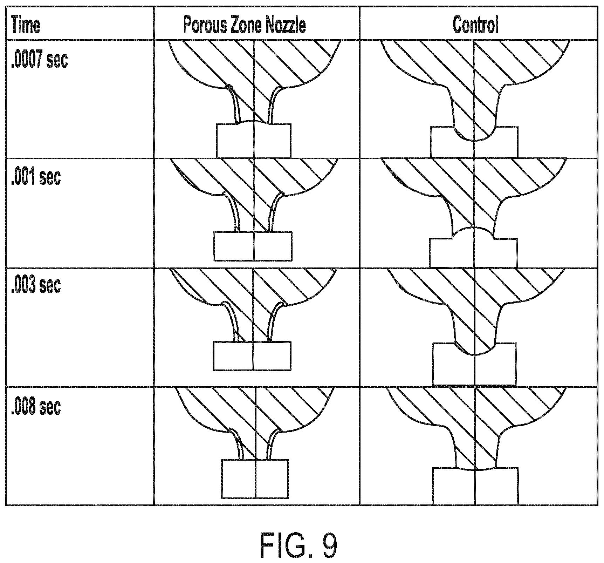

Figure 9 illustrates a schematic cross-sectional side view of the nozzle with the porous region and the nozzle without the porous region, according to an embodiment. Figure 9 corresponds to Figure 8.

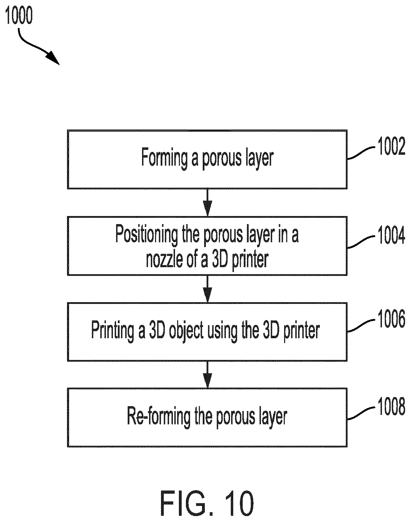

Figure 10 illustrates a flowchart of a method 1000 for operating the 3D printer 100, according to an embodiment. The method 1000 may be used to increase the resistance of the flow of the liquid printing material 120 through the nozzle 114 and/or to increase the dampening of the meniscus resonance of the liquid printing material 120. This, in turn, may allow for an increased jetting frequency and/or an increased mass throughput through the nozzle 114 while retaining stability. An illustrative order of the method 1000 is provided below; however, one or more steps of the method 1000 may be performed in a different order, combined, split into sub-steps, repeated or omitted.

The method 1000 may include forming the porous layer 500, as at 1002. In one embodiment, the porous layer 500 may be formed by running the 3D printer 100. More particularly, the 3D printer 100 may jet a first (e.g., sacrificial) amount of the liquid printing material 120 through the nozzle 114 before a second amount is jetted through the nozzle 114 to print the desired 3D object 130. The first (e.g., sacrificial) amount may cause the buildup of metal oxide (e.g., aluminum oxide) on the inner surface of the nozzle 114, which may serve as the porous layer 500.

Optionally, oxygen gas may be introduced into and/or around the nozzle 114 while the first (e.g., sacrificial) amount of the liquid printing material 120 is jetted, which may combine with the first (e.g., sacrificial) amount of the liquid printing material 120 to increase oxidization within the nozzle 114. The oxygen may be decreased or removed (e.g., turned off) during the jetting of the second amount of printing material 120 to minimize oxidation while the 3D object 130 is being printed. This may help to maintain the thickness of the porous layer 500 within the predetermined range.

EP 4 324 581 A1

In another embodiment, the porous layer 500 may be or include a solid insert. The inner surface of the insert may be machined to create a porous inner surface. The insert may be or include a single annular insert, or it may include two or more circumferential portions that may be assembled together to produce the annular insert.

The method 1000 may also include positioning the porous layer 500 in the 3D printer 100, as at 1004. In the embodiment above, where the porous layer 500 is formed by jetting the first (e.g., sacrificial) amount of the printing material 120, this step may occur simultaneously with the forming of the porous layer 500. In the embodiment above, where the porous layer 500 is a solid insert, the insert may be positioned within the nozzle 114 after the insert is formed (e.g., molded and/or machined). More particularly, the insert may be moved upward and into the bore of the nozzle 114. The insert may remain in place via a friction fit, adhesive, threads on the outer surface of the insert engaging corresponding threads on the inner surface of the nozzle, or the like.

The method 1000 may also include printing the 3D object 130, as at 1006. More particularly, this may include jetting the liquid printing material 120 through the nozzle 114 (with the porous layer 500 therein) to produce the 3D object 130 on the substrate 140. In the embodiment above, where the porous layer 500 is formed by jetting the first (e.g., sacrificial) amount of the printing material 120, this step may include jetting the second amount of the liquid printing material 120.

As mentioned above, the porous layer 500 may increase the resistance of the flow of the printing material 120 through the nozzle 114. The porous layer 500 may also or instead increase the damping of the printing material 120 in the nozzle 114, which causes the resonance or oscillations of the meniscus 126 to reach equilibrium more quickly. As a result, the drops 124 may be jetted through the nozzle 114 at a frequency from about 400 Hz to about 1000 Hz or about 500 Hz to about 800 Hz, whereas the frequency for conventional printers is about 300 Hz. In addition, due at least partially to the porous layer 500, the mass throughput through the nozzle 114 during printing may be from about 0.06 g/s to about 0.20 g/s or from about 0.08 g/s to about 0.15 g/s, whereas the mass throughput through a conventional nozzle is about 0.045 g/s.

The method 1000 may also include re-forming the porous layer 500, as at 1008. The jetting of the (e.g., second amount of the) printing material 120 to print the 3D object 130 may gradually cause the thickness 504 of the porous layer 500 to increase. Once the thickness 504 exceeds a predetermined threshold (e.g., the upper end of the range provided above), the porous layer 500 may be re-formed. Re-forming the porous layer 500 may include reducing the thickness of the porous layer 500 (e.g., by running a drill up into the nozzle 114). Re-forming the porous layer 500 may also or instead include removing the porous layer 500 and forming a new porous layer. In one example, this may include cooling the nozzle 114 and/or porous layer 500, which may cause the porous layer 500. The porous layer 500 may then be re-heated. The temperature variations may cause the porous layer 500 to fracture. The porous layer 500 may then be jetted out of the nozzle 114 along with the printing material 120, and then a new porous layer 500 may be formed and/or positioned within the nozzle 114. Re-forming the porous layer 500 may also or instead include removing the insert and replacing it with a new insert.

Notwithstanding that the numerical ranges and parameters setting forth the broad scope of the present teachings are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein. For example, a range of "less than 10" may include any and all sub-ranges between (and including) the minimum value of zero and the maximum value of 10, that is, any and all sub-ranges having a minimum value of equal to or greater than zero and a maximum value of equal to or less than 10, e.g., 1 to 5.

While the present teachings have been illustrated with respect to one or more implementations, alterations and/or modifications may be made to the illustrated examples without departing from the spirit and scope of the appended claims. For example, it may be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings. It may be appreciated that structural objects and/or processing stages may be added, or existing structural objects and/or processing stages may be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of" is used to mean one or more of the listed items may be selected. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated embodiment. The terms "couple," "coupled," "connect," "connection," "connected," "in connection with," and "connecting" refer to "in direct connection with" or "in connection with via one or more intermediate elements or members." Finally, the terms "exemplary" or "illustrative" indicate the description is used as an example, rather than implying that it is an ideal. Other embodiments of the present teachings may be apparent to those skilled in the art from consideration of the specification and practice of the disclosure herein. It is intended that the specification and examples be considered as exemplary only, with a true scope and spirit of the present teachings being indicated by the following claims.

**Claims**

1. A nozzle configured to be used in a 3D printer, the nozzle comprising:

   a structure; and
   a layer positioned at least partially within the structure, wherein the layer is configured to decrease a settling time of a meniscus of a printing material after a drop of the printing material is ejected from the nozzle.

2. The nozzle of claim 1, wherein the layer comprises a substantially annular layer that is in contact with an inner circumferential surface of the structure.

3. The nozzle of claim 1, wherein a diameter of an inner circumferential surface of the structure is from about 400 $\mu$m to about 600 $\mu$m, and wherein a diameter of an inner circumferential surface of the layer is from about 20 $\mu$m to about 80 $\mu$m smaller than the diameter of the inner circumferential surface of the structure.

4. The nozzle of claim 1, wherein the layer is configured according to one or more of the following:

   a length of the layer is from about 100 $\mu$m to about 3 mm;
   an average thickness of the layer is from about 5 $\mu$m to about 100 $\mu$m;
   an average porosity of the layer is from about 20% to about 60%.

5. The nozzle of claim 1, wherein the layer is configured to decrease a maximum extension of the meniscus after the drop is ejected, and wherein the maximum extension is less than 0.1 mm.

6. A nozzle configured to be used in a 3D printer, the nozzle comprising:

   a structure defining an inner circumferential surface; and
   a layer positioned at least partially within the structure, wherein the layer comprises an annular layer that is in contact with the inner circumferential surface, and wherein the layer has an average porosity from about 10% to about 70%.

7. The nozzle of claim 6, wherein a diameter of the inner circumferential surface of the structure is from about 400 $\mu$m to about 600 $\mu$m, and wherein a diameter of an inner circumferential surface of the layer is from about 20 $\mu$m to about 80 $\mu$m smaller than the diameter of the inner circumferential surface of the structure.

8. The nozzle of claim 6, wherein the layer is configured according to one or more of the following:

   wherein a length of the layer is from about 100 $\mu$m to about 3 mm;
   wherein an average thickness of the layer is from about 5 $\mu$m to about 100 $\mu$m;
   wherein an average porosity of the layer is from about 30% to about 50%.

9. The nozzle of claim 1 or claim 6, wherein the structure is made from graphite, and wherein the layer is made from a different material than the structure.

10. The nozzle of claim 1 or claim 6, wherein the layer comprises a solidified portion of the printing material, optionally wherein the printing material comprises metal.

11. The nozzle of claim 1 or claim 6, wherein the layer comprises magnesium oxide (MgO), aluminum oxide ($Al_2O_3$), aluminum carbide ($Al_4C_3$), titanium oxide (TiO), or a combination thereof; or
    wherein the layer comprises a ceramic material and magnesium oxide (MgO), aluminum oxide ($Al_2O_3$), or both.

**12.** The nozzle of claim 1 or claim 6, wherein the layer is configured to decrease a settling time of the meniscus of a printing material after a drop of the printing material is ejected from the nozzle, optionally wherein the settling time for the meniscus is less than 6e-3 s after the drop is ejected.

**13.** The nozzle of claim 6, wherein the layer is configured to decrease a maximum extension of a meniscus of a printing material after a drop of the printing material is ejected from the nozzle, and wherein the maximum extension is less than 0.1 mm.

**14.** The nozzle of claim 1 or claim 6, wherein the layer is configured to allow an increased mass throughput of printing material through the nozzle, and wherein the increased mass throughput is from about 0.06 g/s to about 0.20 g/s.

**15.** The nozzle of claim 1 or claim 6, wherein the nozzle is configured to eject a plurality of drops of a printing material therefrom, wherein the layer is configured to allow the drops to be ejected at an increased frequency, and wherein the increased frequency is from about 400 Hz to about 1000 Hz.

FIG. 1

EP 4 324 581 A1

114

2b

H

$d_n$

l

h

126

$h_m$

Substrate 140

FIG. 2

FIG. 3

FIG. 4A

FIG. 4B

FIG. 5

FIG. 6A

FIG. 6B

FIG. 6C

FIG. 6D

X-section of 1-hr baseline run of 4043 Al in 1-piece design

Ti

Al, trace Si

114

500E

x400    15.0kV LVBED-C    SEM    10μm    0855    4/10/2019    WD 9mm

FIG. 6E

X-section of 4043 Al 6-hr nozzle at the edge of the aperture | MgO

Epoxy Resin

114

Graphite

500F

4043 Al

10μm 0330 2/7/2019
x400 15.0kV LVBED-C SEM WD 10mm

FIG. 6F

FIG. 7

Meniscus Resonance

Control Nozzle
Porous Zone Nozzle

Time (s)

Meniscus Extension (mm)

FIG. 8

| Time | Porous Zone Nozzle | Control |
|------|--------------------|---------|
| .0007 sec | | |
| .001 sec | | |
| .003 sec | | |
| .008 sec | | |

FIG. 9

EP 4 324 581 A1

1000

Forming a porous layer — 1002

↓

Positioning the porous layer in a nozzle of a 3D printer — 1004

↓

Printing a 3D object using the 3D printer — 1006

↓

Re-forming the porous layer — 1008

FIG. 10

Europäisches
Patentamt

European
Patent Office

Office européen
des brevets

# EUROPEAN SEARCH REPORT

**Application Number**

EP 23 18 8900

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/032534 A1 (MICHALOWSKI ANDREAS [DE] ET AL) 3 February 2022 (2022-02-03) | 1-5,9, 12,14,15 | INV. B22F10/22 |
| A | * paragraphs [0001] - [0002], [0005] - [0016], [0026] - [0029], [0032] - [0034], [0036]; claims; figures * | 10,11 | B22F12/53 B33Y30/00 |
| X | US 2021/387253 A1 (SCHWEIZER BENJAMIN [DE] ET AL) 16 December 2021 (2021-12-16) * paragraphs [0011] - [0013], [0023], [0033] - [0038]; claims; figures * | 6-8,13 | |
| X | JP 4 997926 B2 (MITSUBISHI ELECTRIC CORP) 15 August 2012 (2012-08-15) * paragraphs [0001], [0006], [0016] - [0018], [0028] - [0032], [0034]; claims; figures 10-12 * | 1-5,8,12 | |
| X | US 2003/205628 A1 (AIZAWA JYUNICHI [JP] ET AL) 6 November 2003 (2003-11-06) * paragraphs [0014], [0015], [0029] - [0034], [0040] - [0043], [0046] - [0049], [0059] - [0061], [0066]; claims; figures 1-8 * | 1,2,5,9, 11,12 | |
| T | Ju.V. Naidich ET AL: "The Wettability of Solids by Liquid Metals" In: "The Wettability of Solids by Liquid Metals", 1 January 1981 (1981-01-01), Elsevier, XP055670999, ISSN: 0096-4298 ISBN: 978-0-12-571814-1 vol. 14, pages 353-484, DOI: 10.1016/B978-0-12-571814-1.50011-7, | 1-15 | TECHNICAL FIELDS SEARCHED (IPC) B22F B29C B33Y B23K |

-/--

The present search report has been drawn up for all claims

| Place of search | Date of completion of the search | Examiner |
|---|---|---|
| The Hague | 11 January 2024 | Ceulemans, Judy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | NICOLAS EUSTATHOPOULOS: "Wetting by Liquid Metals-Application in Materials Processing: The Contribution of the Grenoble Group", METALS, vol. 5, no. 1, 10 January 2015 (2015-01-10), pages 350-370, XP055670990, CH ISSN: 2075-4701, DOI: 10.3390/met5010350 ----- | 1-15 | |

**TECHNICAL FIELDS SEARCHED (IPC)**

The present search report has been drawn up for all claims

| Place of search | Date of completion of the search | Examiner |
|---|---|---|
| **The Hague** | **11 January 2024** | **Ceulemans, Judy** |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**page 2 of 2**

## ANNEX TO THE EUROPEAN SEARCH REPORT
## ON EUROPEAN PATENT APPLICATION NO.

**EP 23 18 8900**

This annex lists the patent family members relating to the patent documents cited in the above-mentioned European search report.
The members are as contained in the European Patent Office EDP file on
The European Patent Office is in no way liable for these particulars which are merely given for the purpose of information.

**11-01-2024**

| Patent document cited in search report | | Publication date | Patent family member(s) | | Publication date |
|---|---|---|---|---|---|
| US 2022032534 | A1 | 03-02-2022 | CN | 113438994 A | 24-09-2021 |
| | | | DE | 102018221738 A1 | 18-06-2020 |
| | | | EP | 3894113 A1 | 20-10-2021 |
| | | | US | 2022032534 A1 | 03-02-2022 |
| | | | WO | 2020120547 A1 | 18-06-2020 |
| US 2021387253 | A1 | 16-12-2021 | CN | 112789129 A | 11-05-2021 |
| | | | DE | 102018216930 A1 | 02-04-2020 |
| | | | EP | 3860784 A1 | 11-08-2021 |
| | | | US | 2021387253 A1 | 16-12-2021 |
| | | | WO | 2020070002 A1 | 09-04-2020 |
| JP 4997926 | B2 | 15-08-2012 | JP | 4997926 B2 | 15-08-2012 |
| | | | JP | 2008124121 A | 29-05-2008 |
| US 2003205628 | A1 | 06-11-2003 | JP | 3643089 B2 | 27-04-2005 |
| | | | JP | 2003324121 A | 14-11-2003 |
| | | | US | 2003205628 A1 | 06-11-2003 |

EPO FORM P0459

For more details about this annex : see Official Journal of the European Patent Office, No. 12/82